# EUROPEAN PATENT APPLICATION

(11) **EP 1 712 905 A1**
(43) Date of publication of application: **18.10.2006**
(21) Application number: 05709706.5
(22) Date of filing: 03.02.2005
(51) Int. Cl.: G01N 30/02, G01N 30/88, B01D 15/08

(54) **METHOD OF OPTICAL ISOMER SEPARATION WITH USE OF SUPERCRITICAL FLUID CHROMATOGRAPHY**

(30) Priority: 03.02.2004 JP 2004026658
(71) Applicant: DAICEL CHEMICAL INDUSTRIES, LTD., Sakai-shi, Osaka 590-0905 (JP)
(72) Inventor: MATABE, Akihiro, Tokyo 1140024 (JP); ODA, Hirofumi, Arai-shi, Niigata 944047 (JP); ISHIGURO, Takeshi, Nakakubiki-gun, Niigata 9440149 (JP)
(74) Representative: Grünecker, Kinkeldey, Stockmair & Schwanhäusser Anwaltssozietät
(86) International application number: PCT/JP2005/001613
(87) International publication number: WO 2005/075974

(57) **Abstract**

A supercritical fluid chromatography using a column using a column having an optical isomer separating agent containing a polysaccharide derivative capable of optical isomer separation, wherein use is made of a mobile phase containing a supercritical fluid and wherein as the optical isomer separating agent received in the column to conduct optical isomer separation, an optical separating agent containing a polysaccharide derivative capable of optical isomer separation in an amount of 50% by mass or more based on the entirety of the optical isomer separating agent is used to thereby, even in the use of optical isomer separating agent with a multiplicity of identification sites, enable accomplishing excellent separation of optical isomers.

## Description

### Technical Field

The present invention relates to a method of separating optical isomers through supercritical fluid chromatography employing a column having an optical isomer separating agent, and more specifically to a method of separating optical isomers through supercritical fluid chromatography employing a column having an optical isomer separating agent containing a high ratio of a polysaccharide derivative capable of separating the optical isomers.

### Background Art

Each of various kinds of chromatography has been used as a method of separating a desired substance in a sample. A known example of such the chromatography is supercritical fluid chromatography using a supercritical fluid as a mobile phase. Since the supercritical fluid chromatography uses a fluid, which is referred to as a supercritical fluid and has a greater variety of properties than that of a general solvent, as a mobile phase, investigation has been conducted into the utilization of supercritical fluid chromatography for the separation, analysis, purification, and the like of various substances that have been considered to be difficult to separate, for example optical isomers.

Meanwhile, for separation of optical isomers, there is known a technique of separating optical isomers by using a column packed with an optical isomer separating agent containing a polysaccharide derivative capable of separating optical isomers such as a polysaccharide ester derivative or a polysaccharide carbamate derivative carried on a particulate carrier such as silica for batch-type liquid chromatography (see WO95/23125, for example).

In a case where an optical isomer is separated from a mixture of optical isomers such as racemic body in industrial applications, an optical isomer separating agent preferably has a high content of an optical isomer identification site (a polysaccharide derivative, for example) for enhancing productivity of the optical isomer to be separated. Based on such an idea, an optical isomer separating agent having as high a content of the identification site as possible is most preferably used.

In use of an optical isomer separating agent having a high content of an identification site for general high speed liquid chromatography, desorption of optical isomers from the identification site is repeated in a mobile phase such as an organic solvent or a mixed solvent of an organic solvent and water. Therefore, the optical isomers may not transfer among the identification sites at a sufficient speed appropriate for the high content of the identification site. Thus, favorable separation is hardly performed due to peaks to be detected becoming broad, etc.

### Disclosure of the Invention

### Problems to be solved by the Invention

An object of the present invention is to provide a technique of separating optical isomers allowing favorable separation even in a case where an optical isomer separating agent having a high content of an identification site is used for supercritical fluid chromatography employing a column having an optical isomer separating agent containing a polysaccharide derivative capable of separating optical isomers.

### Means for solving the Problems

In the present invention, optical isomers are separated through supercritical fluid chromatography employing a supercritical fluid as a mobile phase, and employing a column having an optical isomer separating agent, containing a polysaccharide derivative and having a sufficiently high content of a polysaccharide derivative as an identification site.

In other words, the present invention relates to a method of separating optical isomers in a sample (hereinafter, sometimes simply referred to as " separation method") comprising a mixture of optical isomers, comprising: injecting the sample comprising a mixture of optical isomers into a mobile phase; passing the mobile phase having the sample injected thereinto through a column having an optical isomer separating agent capable of separating the optical isomers, in which: a mobile phase comprising a supercritical fluid as the above-mentioned mobile phase; and as the above-mentioned optical isomer separating agent, an optical isomer separating agent comprising 50 mass% or more of a polysaccharide derivative capable of separating the optical isomers with respect to a total amount of the optical isomer separating agent.

### Brief Description of the Drawings

[Fig. 1] A diagram showing an example of an apparatus for preparative supercritical fluid chromatography used in the present invention.
[Fig. 2] A chromatogram obtained through optical resolution of trans-stilbene oxide by using a column 1 packed with OB beads for supercritical fluid chromatography in Example 1.
[Fig.3] A chromatogram obtained through optical resolution of trans-stilbene oxide by using a comparative column packed with silica particles carrying OB polymers for supercritical fluid chromatography in Comparative Example 1.
[Fig. 4] A chromatogram obtained through optical resolution by using a column 1 packed with OB beads for supercritical fluid chromatography and injecting 400 µg of trans-stilbene oxide in Example 2.
[Fig. 5] A chromatogram obtained through optical resolution by using a column 1 packed with OB beads for supercritical fluid chromatography and injecting 500 µg of trans-stilbene oxide in Example 2.
[Fig. 6] A chromatogram obtained through optical resolution by using a column 1 packed with OB beads for supercritical fluid chromatography and injecting 700 µg of trans-stilbene oxide in Example 2.
[Fig. 7] A chromatogram obtained through optical resolution by using a comparative column packed with silica particles carrying OB polymers for supercritical fluid chromatography and injecting 400 µg of trans-stilbene oxide in Comparative Example 2.
[Fig.8] A chromatogram obtained through optical resolution by using a comparative column packed with silica particles carrying OB polymers for supercritical fluid chromatography and injecting 500 µg of trans-stilbene oxide in Comparative Example 2.
[Fig. 9] A chromatogram obtained through optical resolution by using a comparative column packed with silica particles carrying OB polymers for supercritical fluid chromatography and injecting 700 µg of trans-stilbene oxide in Comparative Example 2.

### Best Mode for carrying out the Invention

According to the present invention, in a method of separating optical isomers in a sample comprising a mixture of optical isomers which comprises injecting a sample comprising a mixture of optical isomers into a mobile phase, and passing the mobile phase having the sample injected thereinto through a column having an optical isomer separating agent capable of separating the optical isomers, a mobile phase comprising a supercritical fluid is employed as the mobile phase.

The mobile phase is not particularly limited so long as a supercritical fluid is contained. In the present invention, the supercritical fluid refers to a gas under conditions of at least one or two of a pressure exceeding a critical pressure and a temperature exceeding a critical temperature. Examples of the gas that can be used include carbon dioxide, ammonia, sulfur dioxide, hydrogen halogenide, nitrous oxide, hydrogen sulfide, methane, ethane, propane, butane, ethylene, propylene, halogenated hydrocarbon, and water. Carbon dioxide is preferred for the gas from viewpoints of flammability, explosibility, toxicity to human bodies, ease of handling, economical efficiency, and the like.

In the present invention, examples of the mobile phase include a supercritical fluid, and a mixed solvent containing a supercritical fluid and a solvent. An example of the solvent to be mixed with the supercritical fluid is an organic solvent. A known organic solvent selected in accordance with the kinds of optical isomers as separation targets, the kind of an optical isomer separating agent, and the like may be used. Examples of the organic solvent include lower alcohols such as ethanol and 2-propanol.

In the present invention, an optical isomer separating agent containing 50 mass% or more of a polysaccharide derivative with respect to a total amount of the optical isomer separating agent is employed as the optical isomer separating agent. The optical isomer separating agent is formed of the polysaccharide derivative alone, or a carrier and a polysaccharide derivative to be carried thereon.

The polysaccharide derivative is not particularly limited so long as the polysaccharide derivative can be used for separation of optical isomers. An example of such a polysaccharide derivative is a polysaccharide derivative containing an optically active polysaccharide as a skeleton, in which at least a part of hydroxide groups and amino groups of the polysaccharide is substituted by a functional group acting on the optical isomers in a sample.

The polysaccharide may be a synthetic polysaccharide, a natural polysaccharide, or a modified polysaccharide of a natural product, and may be any optically active polysaccharide. However, the polysaccharide preferably has a highly regulated bonding pattern and preferably has a chain structure.

Specific examples include: β-1,4-glucan (cellulose); α-1,4-glucan (amylose, amylopectin); α-1,6-glucan (dextran); β-1,6-glucan (busturan); β-1,3-glucan (curdlan, schizophyllan, or the like); α-1,3-glucan; β-1,2-glucan (Crown Gall polysaccharide); β-1,4-galactan; β-1,4-mannan; α-1,6-mannan; β-1,2-fructan (inulin); β-2,6-fructan (levan); β-1,4-xylan; β-1,3-xylan; β-1,4-chitosan; α-1,4-N-acetylchitosan (chitin); pullulan; agarose; and alginic acid. Starch containing amylose is also included.

Of those, cellulose, amylose, β-1,4-xylan, β-1,4-chitosan, chitin, β-1,4-mannan, inulin, curdlan, and the like which can easily obtain high-purity polysaccharides are preferable, and cellulose and amylose are particularly preferable.

A number average polymerization degree (average number of pyranose or furanose rings in one molecule) of the polysaccharide is 5 or more, and preferably 10 or more. An upper limit of the number average polymerization degree of the polysaccharide is not particularly determined but is preferably 1,000 or less in view of ease of handling in production of the separating agent.

The functional group refers to a functional group acting on the optical isomers as separation targets in the sample. Action of the functional group on the optical isomers is not particularly limited so long as it is an action of a sufficient level allowing optical resolution of the optical isomers with the polysaccharide although the kind of functional group varies depending on the kinds of optical isomers as separation targets. Examples of the action include: affinity interaction such as a hydrogen bond between the optical isomers and the functional group, n-n interaction, and dipole-dipole interaction; and anti-affinity interaction such as steric hindrance. It is considered that in a case where a pair of optical isomers approaches a polysaccharide derivative, directions of the optical isomers are adjusted by such interaction without inhibiting approach of at least one optical isomer to the polysaccharide derivative. Alternatively, it is considered that a higher order structure of the polysaccharide derivative itself is adjusted by such interaction into a shape which is advantageous for asymmetric identification.

The functional group is selected in accordance with the kinds of optical isomers as separation targets. An example of the functional group is a group having an aromatic group which is bonded to a polysaccharide through an ester bond, a urethane bond, or an ether bond, and which may have a substituent. The aromatic group includes a heterocyclic ring and a condensed ring. Examples of the substituent which the aromatic group may have include an alkyl group having about 8 or less carbon atoms, a halogen group, an amino group, and alkoxyl group. A substitutional degree of functional group and a position of the functional group in the polysaccharide derivative are not particularly limited and may arbitrarily be selected in accordance with the kind of functional group, the kind of polysaccharide, and the like.

The polysaccharide derivative may be produced through a known method. For example, the polysaccharide derivative may be produced by reacting through a dehydration reaction of: a compound capable of reacting with a hydroxyl group or an amino group of the polysaccharide, and having the functional group or forming the functional group through a reaction with the hydroxyl group or the amino group; and the polysaccharide.

. The polysaccharide derivative is particularly preferably a polysaccharide ester derivative or a polysaccharide carbamate derivative described in WO95/23125, for example, from the viewpoint of realizing separation of various optical isomers. To be specific, examples of the polysaccharide derivative include polysaccharide derivatives each having amylose as a skeleton, cellulose trisbenzoate, cellulose tris(phenylcarbamate), and cellulose tris(3,5-dimethylphenylcarbamate).

An optical isomer separating agent formed of a polysaccharide derivative alone, that is, an optical isomer separating agent having a polysaccharide derivative content of 100 mass% is formed of the polysaccharide derivative as a structural unit. The optical isomer separating agent formed of the polysaccharide derivative alone is formed from a compound such as a polymer prepared by chemically bonding the polysaccharide derivatives directly or through another appropriate substance. The compound may be formed through a known esterification reaction or the like. The optical isomer separating agent formed of the polysaccharide derivative alone may be in any form so long as it is possible to be received in a column. Examples of the form to be used in the present invention include: particles; and porous integrally formed product integrally forming a stationary phase when received in a column tube.

Note that in the case where the optical isomer separating agent to be used in the present invention is in a form of particles, its particle size is preferably 1 to 100 µm, more preferably 1 to 75 µm, and furthermore preferably 1 to 30 µm.

The optical isomer separating agent formed of the polysaccharide derivative alone may be produced through a known method. For example, the particles may be formed by dissolving the compound in a solvent and dropping the thus-obtained solution of the compound into an insoluble solvent in which the compound does not dissolve such as water, preferably an insoluble solvent containing a dispersant such as an anionic surfactant while the insoluble solvent is stirred, as described in the specification of Japan Official Patent Gazette 2783819. The integrally formed product may be produced by forming the compound into a porous body of a predetermined shape. An example of such a production method involves dispersing the insoluble solvent into the solution of the compound, and distilling off and replacing the solvent, or distilling off and replacing the solvent while bubbles are dispersed.

In the optical isomer separating agent formed of a carrier and the polysaccharide derivative carried on the carrier (hereinafter, also referred to as a "carry-type separating agent"), the carrier is not particularly limited so long as carrying the polysaccharide derivative and forming a stationary phase in the column is possible. Known inorganic and organic carriers used in chromatography may be used as such a carrier. The carrier is preferably a porous body from a viewpoint of enhancing separation efficiency of the optical isomer.

Examples of the above-mentioned carriers include: porous organic carriers such as polystyrene, polyacrylamide, polyacrylate, and derivatives thereof; and porous inorganic carriers such as silica, alumina, magnesia, glass, kaolin, titanium oxide, silicate, and hydroxyapatite.

For a polysaccharide derivative in the carry-type separating agent, the above-mentioned polysaccharide derivative is employed. The polysaccharide derivative is carried on the carrier through chemical adsorption or physical adsorption between the polysaccharide derivative and the carrier, a chemical bond between the polysaccharide derivative and the carrier directly or through another compound, and the like. Carrying of the polysaccharide derivative on the carrier may be performed through a known method involving immersing the carrier into a solution containing the polysaccharide derivative and another compound as required, reacting the other compound as required, distilling off the solvent in the solution or replacing the solvent in the solution with another solvent, and the like.

For the carry-type separating agent, a carry-type separating agent having a 50 mass% or more carried amount of the polysaccharide derivative with respect to a total amount of the carry-type separating agent is employed. A carried amount of less than 50 mass% may not provide sufficient productivity of the optical isomer. The carried amount is more preferably 60 mass% or more, and furthermore preferably 80 mass% or more from the viewpoint of further enhancing the productivity of the optical isomer.

The carried amount of the polysaccharide derivative may be adjusted by further bonding the polysaccharide derivative to the polysaccharide derivative carried on the carrier through chemical adsorption, or chemical bonding directly or through another compound. The carried amount of the polysaccharide derivative may be determined through, for example: mass analysis; measurement of thickness of the polysaccharide derivative carried on the carrier through cross-sectional observation of the carry-type separating agents; elemental analysis of elements specific to the polysaccharide derivative or the carrier; or the like.

The separation method of the present invention may be performed in the same manner as in normal supercritical fluid chromatography except that a column having the above-mentioned optical isomer separating agent is used. The packing or receiving of the optical isomer separating agent into a column tube may be performed in the same manner as used for a known separating agent in accordance with the form of the optical isomer separating agent.

Hereinafter, an embodiment of the present invention is described. First, an apparatus for preparative supercritical fluid chromatography to be used for the separation method of the present invention is explained.

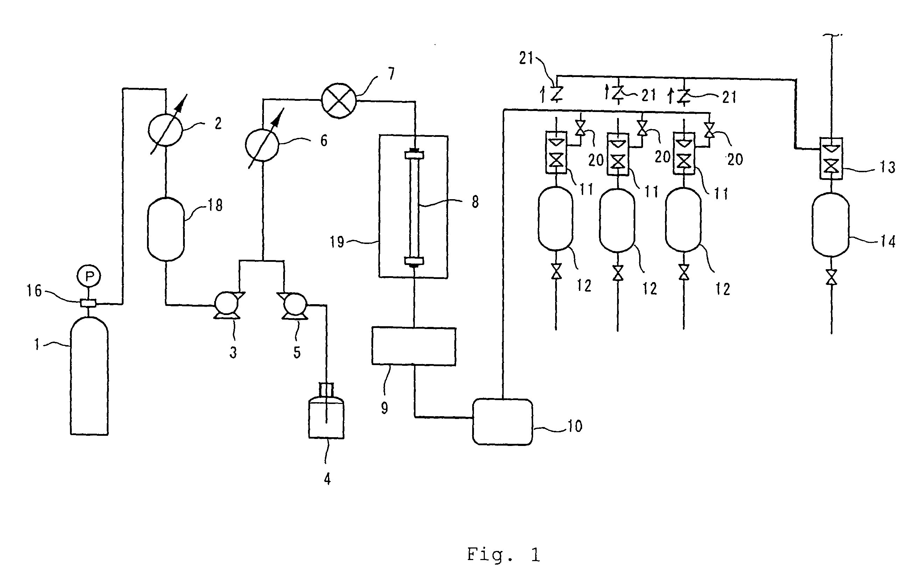

As shown in Fig. 1, the apparatus for preparative supercritical fluid chromatography comprises: a bomb 1 as a gas feeding device filled with carbon dioxide having a high pressure; a heat exchanger 2 for cooling and liquefying carbon dioxide having a high pressure; a pump 3 for sending the liquefied gas of carbon dioxide produced in the heat exchanger 2; a pump 5 for feeding a solvent fed from a solvent tank 4 into the liquefied gas sent by the pump 3; a heat exchanger 6 for heating a mixed solvent of the liquefied gas and the solvent to turn the liquefied gas into a supercritical fluid; an injection device 7 for injecting a sample containing a mixture of optical isomers into a mobile phase as a mixture of the produced supercritical fluid and the solvent; a column 8 for separating optical isomers in the injected sample; a detector 9 for detecting the optical isomers in the mobile phase that has passed the column 8; a back pressure regulating valve 10 as a pressure regulating device for keeping the pressure in a system ranging from the pump 3 to the detector 9 at a predetermined pressure; multiple vapor liquid separators 11 each intended to subject the mobile phase which has passed the back pressure regulating valve 10 to vapor liquid separation; tanks 12 each intended to store a liquid that has been subjected to vapor liquid separation; a purifying device 13 for additionally removing a liquid from a gas that has been subjected to vapor liquid separation; and a tank 14 for storing the liquid removed from the gas by the purifying device 13.

The bomb 1, the heat exchanger 2, the pump 3, the heat exchanger 6, the injection device 7, the column 8, the detector 9, and the back pressure regulating valve 10 are connected in series using pipes. The vapor liquid separators 11 are connected by using pipes in parallel with the back pressure regulating valve 10 and the purifying device 13. Meanwhile, the solvent tank 4 and the pump 5 are connected by using a pipe. The pump 5 is connected to a pipe for connecting the pump 3 and the heat exchanger 6 using a pipe. Each of the vapor liquid separators 11 and each of the tanks 12 are connected by using a pipe. The purifying device 13 and the tank 14 are connected by using a pipe.

A pressure regulating valve 16 for releasing carbon dioxide from the bomb 1 at a predetermined pressure is provided between the bomb 1 and the heat exchanger 2. A buffer tank 18 for receiving the liquefied gas produced in the heat exchanger 2 is provided between the heat exchanger 2 and the pump 3. In addition, the column 8 is stored in a column oven 19 for regulating the temperature in the column 8 to a predetermined temperature.

A valve 20 corresponding to each of the vapor liquid separators 11 is provided between the back pressure regulating valve 10 and each of the vapor liquid separators 11 in such a manner that the destination of the mobile phase fed from the back pressure regulating valve 10 can be selected. A check valve 21 for preventing the back flow of a gas from the side of the purifying device 13 to each of the vapor liquid separators 11 is provided between each of the vapor liquid separators 11 and the purifying device 13 in correspondence with each of the vapor liquid separators 11.

Each of the pumps 3 and 5 is a pump capable of sending a constant amount of a liquid. The column 8 is a column packed with the optical isomer separating agent formed of the polysaccharide derivative or the carry-type separating agent. The back pressure regulating valve 10 is a valve that keeps a pressure on a side close to the column 8, that is the pressure of a system ranging from the pumps 3 and 5 to the back pressure regulating valve 10 (primary side of the back pressure regulating valve 10) at a predetermined pressure (for example, 20 MPa).

The apparatus for preparative supercritical fluid chromatography further comprises a controlling device, not shown, for controlling opening and closing of the valve 20 in accordance with detection results from the detector 9. In addition to those components described above, valves such as a valve, a check valve, and a safety valve, various detecting devices such as a pressure gauge, a thermometer, and a flow meter, and peripheral devices such as a heater, a brine chiller, and an accumulator are provided for appropriate sites of the apparatus for preparative supercritical fluid chromatography although they are not shown.

In the apparatus for preparative supercritical fluid chromatography, when the pressure regulating valve 16 is regulated, carbon dioxide is fed from the bomb 1 into the heat exchanger 2 at a predetermined pressure (for example, 4 MPa). Carbon dioxide is cooled and liquefied in the heat exchanger 2.

The liquefied gas of carbon dioxide produced in the heat exchanger 2 is stored in the buffer tank 18, and is fed by the pump 3 into the heat exchanger 6. The liquefied gas to be fed into the heat exchanger 6 is fed with an organic solvent such as a lower alcohol sent from the solvent tank 4 through the pump 5, whereby the liquefied gas and the organic solvent are mixed. This mixed solvent is fed into the heat exchanger 6.

The heat exchanger 6 heats the mixed solvent, whereby the liquefied gas in the mixed solvent is turned into a supercritical fluid. In addition, the temperature of a mobile phase obtained by mixing the supercritical fluid and the solvent is regulated to the temperature of the column 8 set by the column oven 19 (for example, 40°C). A mixed solution of optical isomers is injected as a sample from the injection device 7 into the mobile phase the temperature of which has been regulated.

The sample injected from the injection device 7 is sent to the column 8, and the mixture of the optical isomers in the sample is divided in association with their passage through the column 8.

The optical isomers in the mobile phase that has passed the column 8 are detected by the detector 9. The mobile phase that has passed the detector 9 is sent to the back pressure regulating valve 10. The passing of the mobile phase through the back pressure regulating valve 10 reduces the pressure of the mobile phase. On the other hand, the controlling device opens the predetermined valve 20 and closes the other valves 20 in accordance with the result of the detection by the detector 9. The mobile phase that has passed the back pressure regulating valve 10 is supplied to the predetermined vapor liquid separator 11.

In the vapor liquid separator 11, the mobile phase fed into the separator is subjected to vapor liquid separation. As a result, most of carbon dioxide that has constituted the supercritical fluid is released as a vapor phase from the mobile phase, and the organic solvent containing an optical isomer is stored as a liquid phase in the tank 12. The pressure of the organic solvent stored in the tank 12 is released, or the organic solvent is additionally concentrated under reduced pressure, whereby the optical isomer is taken out.

The carbon dioxide gas released from the mobile phase is sent to the purifying device 13. In the purifying device 13, as in the case of, for example, each of the vapor liquid separators 11, the carbon dioxide gas fed into the device is subjected to vapor liquid separation. As a result, the carbon dioxide gas and a small amount of the organic solvent in the carbon dioxide gas are separated from each other. The carbon dioxide gas is released to, for example, the outside air, and the separated organic solvent is stored in the tank 14.

After that, each of the valves 20 is appropriately opened or closed in accordance with the detection results from the detector 9, whereby the optical isomers in the sample are fractionated. It should be noted that the back flow of a gas from the purifying device 13 to each of the vapor liquid separators 11 or the inflow of a gas from one of the vapor liquid separators 11 to any one of the other vapor liquid separators 11 is prevented by the check valve 21.

The above-mentioned supercritical fluid chromatography employs a column having the optical isomer separating agent containing 50 mass% or more of the polysaccharide derivative. Thus, for separation of the optical isomers through supercritical fluid chromatography employing as a mobile phase a mixed solvent of a supercritical fluid of carbon dioxide and an organic solvent, a content of an optical isomer identification site is high and the optical isomers may transfer among the identification sites quickly. Thus, separation capability per unit volume in column is very high and large amounts of optical isomers may be clearly separated in a short period of time. In industrial production of an optical isomer through separation of optical isomers from a sample, the optical isomer may be produced at high productivity.

### Examples

An example of an optical isomer separating agent formed of a polysaccharide derivative alone and an example of a column packed therewith as a column to be used in the present invention will be described below.

### <Example 1 of optical isomer separating agent>

10 g of a cellulose trisbenzoate polymer (hereinafter, also referred to as "OB polymer") was dissolved in a mixed solvent containing 500 ml of methylene chloride and 50 ml of n-hexyl alcohol, to thereby obtain an OB polymer solution.

Meanwhile, an aqueous solution was prepared by dissolving 2.5 g of sodium dodecylbenzenesulfonate (Tokyo Chemical Industry Co., Ltd.) in 1,000 ml of purified water. The OB polymer solution was dropped into this aqueous solution maintained at 15°C and stirred at 500 rpm over 4.6 hours (dropping rate: 2 ml/min.).

After completion of the dropping, the stirring was maintained at same speed, the temperature of the aqueous solution was regulated to 40°C, and nitrogen gas was flowed to distill methylene chloride off. Then, the resultant was left standing, to thereby obtain OB polymer particles from the aqueous solution.

The obtained OB polymer particles were charged into 200 ml of methanol, and the whole was left standing. Then, a supernatant was removed through decantation. This operation was repeated for several times.

The OB polymer particles precipitated in methanol were collected through filtration with a G4 glass filter, washed sequentially with 300 ml of water, methanol, and a mixed solvent of n-hexane and 2-propanol (hereinafter, also simply referred to as an "H/I solvent", a volume ratio was n-hexane (H)/2-propanol (I) = 9/1), and sucked sufficiently with an aspirator, to thereby obtain OB polymer particles (yield: 9.07 g, yield percent: 91%).

The obtained OB polymer particles were charged into the H/I solvent (volume ratio: H/I = 9/1), and the whole was subjected to ultrasonic treatment for about 30 min. Then, the resultant was allowed pass through a 75 µm-mesh and then a 30 µm-mesh, to thereby classify the OB polymer particles. Classification results are shown below.
Classified product 1: > 75 µm yield: 0.03 g (yield percent: 0.3%)
Classified product 2: 75 to 30 µm yield: < 0.01 g (yield percent: -)
Classified product 3: < 30 µm yield: 9.04 g (yield percent: 90%)

The classified product 3 was charged into ethanol. The whole was stirred and left standing for 30 min. Then, a supernatant was removed through decantation. This operation was repeated for several times, and an optical isomer separating agent 1 was obtained through filtration with a G4 glass filter.

### <Example of column 1>

4.0 g of the optical isomer separating agent 1 was charged and dispersed into n-hexane. The obtained dispersion was allowed to pass through a mesh (#400) and constant pressure packing of a stainless steel column tube (tube diameter: 0.46 mm, length: 25 cm) was performed at 100 kgf/cm² (9.8 MPa) through a slurry method, to thereby obtain a column 1.

### <Example 2 of optical isomer separating agent>

10 g of a cellulose tris(phenylcarbamate) polymer (hereinafter, also referred to as "OC polymer") was dissolved in a mixed solvent containing 500 ml of methylene chloride and 60 ml of acetone, to thereby obtain an OC polymer solution.

Meanwhile, an aqueous solution was prepared by dissolving 5.0 g of sodium dodecylbenzenesulfonate (Tokyo Chemical Industry Co., Ltd.) in 1, 000 ml of purified water. The OC polymer solution was dropped into this aqueous solution maintained at 15°C and stirred at 500 rpm over 4.7 hours (dropping rate: 2 ml/min.).

After completion of the dropping, the stirring was maintained at same speed, the temperature of the aqueous solution was regulated to 40°C, and nitrogen gas was flowed to distill methylene chloride off. Then, the resultant was left standing, to thereby obtain OC polymer particles from the aqueous solution.

The obtained OC polymer particles were charged into about 100 ml of purified water, and the whole was left standing. Then, a supernatant was removed through decantation. This operation was repeated for several times.

The OC polymer particles precipitated in purified water were collected through filtration with a G4 glass filter, washed sequentially with 200 ml of water, methanol, and an H/I solvent (volume ratio: H/I = 9/1), sucked sufficiently with an aspirator, and dried under vacuum (80°C, 3h), to thereby obtain OC polymer particles (yield: 7.46 g, yield percent: 75%).

The obtained OC polymer particles were charged into the H/I solvent (volume ratio: H/I = 9/1), and the whole was subjected to ultrasonic treatment for about 30 min. Then, the resultant was allowed to pass through a 75 µm-mesh and then a 30 µm-mesh, to thereby classify the OC polymer particles and obtain the optical isomer separating agent 2 (classified product 3). Classification results are shown below.
Classified product 1: > 75 µm yield: 0.08 g (yield percent: 0.8%)
Classified product 2: 75 to 30 µm yield: < 0.7 g (yield percent: 7%)
Classified product 3: < 30 µm yield: 6.68 g (yield percent: 67%)

### <Example of column 2>

4.0 g of the optical isomer separating agent 2 was charged and dispersed into the H/I solvent (volume ratio: H/1 = 1/1). The obtained dispersion was allowed to pass through a mesh (#400) and constant pressure packing of a stainless steel column tube (tube diameter: 0.46 mm, length: 25 cm) was performed at 150 kgf/cm² (14.7 MPa) through a slurry method, to thereby obtain a column 2.

### <Example 3 of optical isomer separating agent>

10 g of a cellulose tris(3,5-phenylcarbamate) polymer (hereinafter, also referred to as "OD polymer") was dissolved in a mixed solvent containing 500 ml of methylene chloride and 60 ml of acetone, to thereby obtain an OD polymer solution.

Meanwhile, an aqueous solution was prepared by dissolving 1.0 g of sodium dodecylbenzenesulfonate (Tokyo Chemical Industry Co., Ltd.) in 1, 000 ml of purified water. The OD polymer solution was dropped into this aqueous solution maintained at 15°C and stirred at 500 rpm over 5. 0 hours (dropping rate: 2 ml/min.).

After completion of the dropping, the stirring was maintained at same speed, the temperature of the aqueous solution was regulated to 40°C, and nitrogen gas was flowed to distill methylene chloride off. Then, the resultant was left standing, and a supernatant was removed through decantation. About 50 ml of purified water was added to the resultant, and the whole was left standing. Then, a supernatant was removed through decantation. This operation was repeated for several times.

The OD polymer particles precipitated in purified water were collected through filtration with a G4 glass filter, washed sequentially with 300 ml of water and ethanol, sucked sufficiently with an aspirator, and dried under vacuum (80°C, > 3h), to thereby obtain OD polymer particles (yield: 4.38 g, yield percent: 44%).

The obtained OD polymer particles were charged into the H/I solvent (volume ratio: H/I = 9/1), and the whole was subjected to ultrasonic treatment for about 30 min. Then, the resultant was allowed to pass through a 75 µm-mesh and then a 30 µm-mesh, to thereby classify the OD polymer particles and obtain the optical isomer separating agent 3 (classified product 2). Classification results are shown below.
Classified product 1: > 75 µm yield: 1.05 g (yield percent: 11%)
Classified product 2: 75 to 30 µm yield: < 3.33 g (yield percent: 33%)
Classified product 3: < 30 µm yield: -

### <Example of column 3>

4.5 g of the optical isomer separating agent 3 was charged and dispersed into the H/I solvent (volume ratio: H/I = 9/1). The obtained dispersion was allowed to pass through a mesh (#400) and constant pressure packing of a stainless steel column tube (tube diameter: 0.46 mm, length: 25 cm) was performed at 100 kgf/cm² (9.8 MPa) through a slurry method, to thereby obtain a column 3.

### <Example 1>

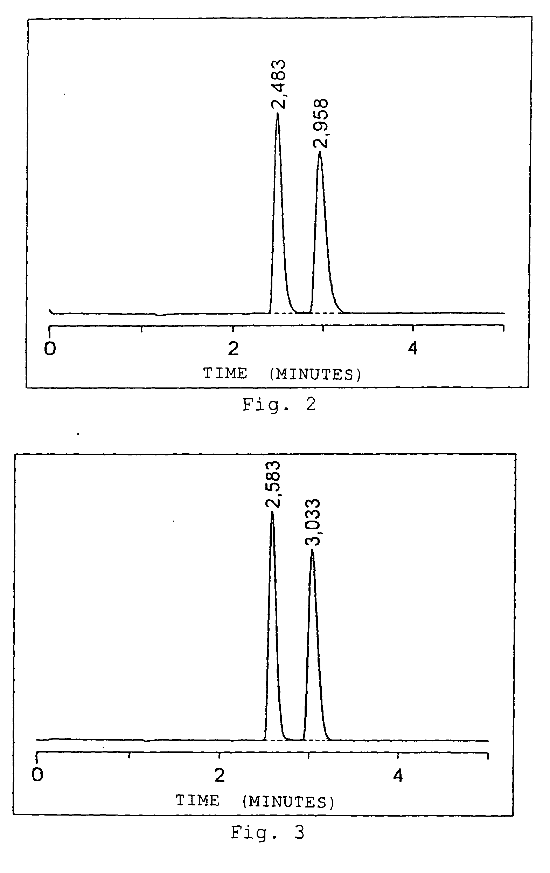

Of the columns 1 to 3 each packed with the thus-obtained optical isomer separating agent formed of polymer particles, the column 1 packed with the optical isomer separating agent 1 formed of OB polymer particles was used in supercritical fluid chromatography to separate the optical isomers. A methanol solution of trans-stilbene oxide was used as a separation sample, and optical resolution of trans-stilbene oxide was performed under the following separation conditions. Fig. 2 shows a chromatogram obtained in optical resolution.

### (Separation conditions)

| | |
|---|---|
| Mobile phase: | CO₂/methanol = 90/10 (v/v) |
| Flow rate: | 3.0 mL/min. |
| Pressure: | 15 MPa |
| Column temperature: | 25°C |
| Detection: | UV 230 nm |
| Column size: | 0.46 mmI.D. × 250 mmL |
| Injection amount: | 10 µg |

(Note that the injection amount refers to a mass of a mixture of optical isomers of trans-stilbene oxide in the separation sample.)

Fig. 2 reveals that the optical isomers of trans-stilbene oxide can be clearly separated in a short period of time by using the column 1 packed with the OB beads for supercritical fluid chromatography.

### <Comparative Example 1>

Optical resolution of trans-stilbene oxide was performed in the same manner as in Example 1 except that there is used a comparative column packed with a carry-type optical isomer separating agent containing silica particles serving as a carrier and the OB polymer carried on the silica particles. The carry-type optical isomer separating agent was produced based on a known method involving immersing silica particles in a solution of the OB polymer before drying. A content of the OB polymer in the carry-type optical isomer separating agent was 20 mass%. Fig. 3 shows a chromatogram obtained in optical resolution.

Fig. 3 reveals that the optical isomers of trans-stilbene oxide can be clearly separated in a short period of time by using the comparative column for supercritical fluid chromatography under the same conditions as those of Example 1.

### <Example 2>

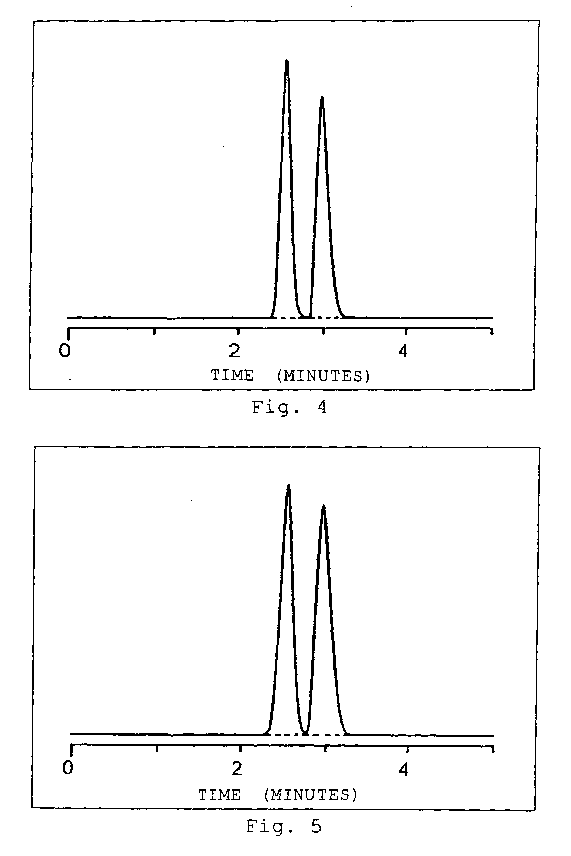

Optical resolution of trans-stilbene oxide was performed under the same conditions as those of Example 1 except that the detection wavelength was changed to 254 nm and the injection amount was changed to 400 µg, 500 µg, and 700 µg. Figs. 4 to 6 each show a chromatogram obtained in optical resolution.

Figs. 4 to 6 reveal that in optical resolution of trans-stilbene oxide through supercritical fluid chromatography employing the column 1 packed with the OB beads, peaks of the respective optical isomers of trans-stilbene oxide can be clearly detected in a short period of time even in the case where the injection amount increases.

### <Comparative Example 2>

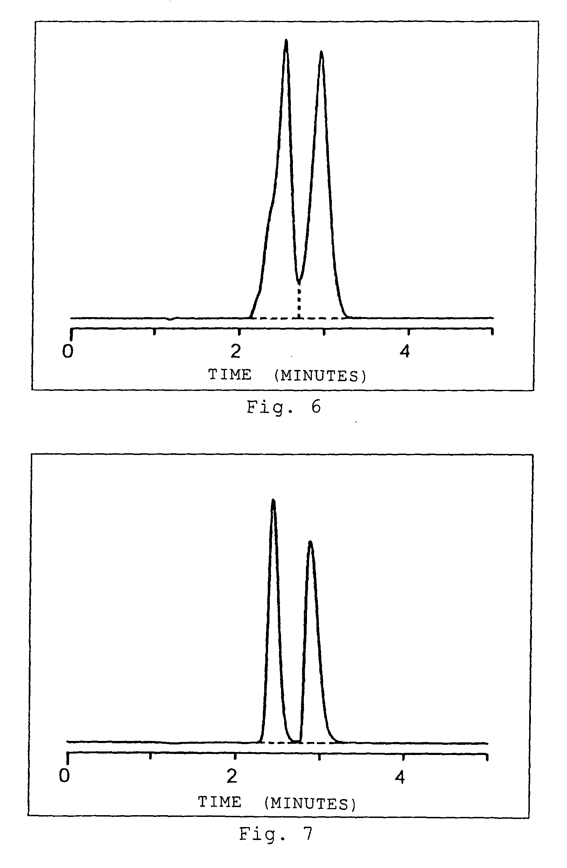

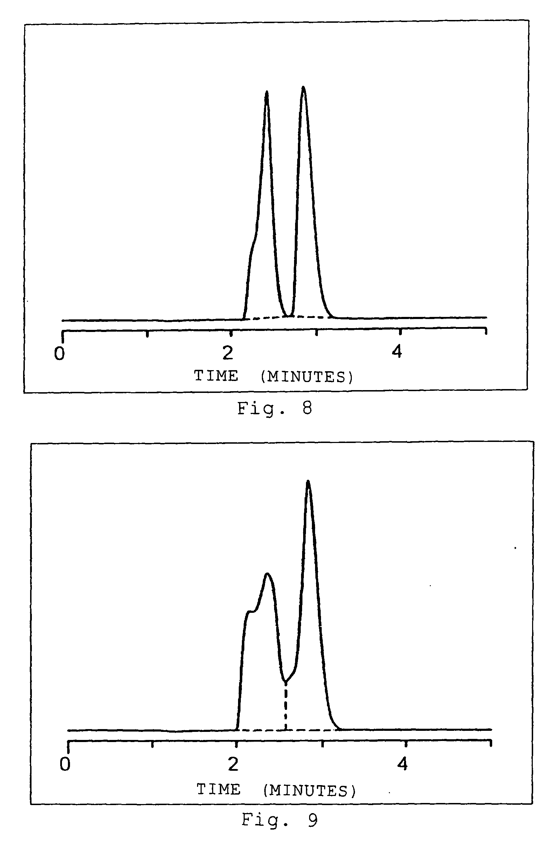

Optical resolution of trans-stilbene oxide was performed under the same conditions as those of Example 2 except that the comparative column was used. Figs. 7 to 9 each show a chromatogram obtained in optical resolution.

Figs. 7 to 9 reveal that in optical resolution of trans-stilbene oxide through supercritical fluid chromatography employing the comparative column packed with the carry-type optical isomer separating agent having the OB polymer carried on silica particles, a detected peak pattern was irregular when 500 µg of the mixture was injected, and a detected peak pattern was more significantly irregular when 700 µg of the mixture was injected.

These examples reveal that optical resolution through supercritical fluid chromatography employing a column packed with beads of a polysaccharide derivative allows separation of larger amounts of optical isomers at one time compared with those of optical resolution through supercritical fluid chromatography employing a column packed with a conventional carry-type optical isomer separating agent. In the case where an optical isomer is produced through separation of optical isomers, an injection amount (load) per operation of a mixture of the optical isomers serving as raw materials may be increased, to thereby produce the optical isomer at higher productivity.

### Industrial Applicability

In the present invention, the mobile phase contains a supercritical fluid. The supercritical fluid has a density similar to that of a liquid, and a diffusion coefficient similar to that of a gas and about 100 times of that of a liquid. Thus, the mobile phase containing the supercritical fluid can sufficiently increase a rate of transfer of the optical isomers among the optical isomer separating agents as compared to that of the conventional high performance liquid chromatography. Thus, favorable separation of the optical isomers may be performed even in the case where there is used an optical isomer separating agent having a high content of an identification site, that is, having a content of the polysaccharide derivative of 50 mass% or more.

## Claims

1. A method of separating optical isomers in a sample comprising a mixture of optical isomers, comprising:
injecting a sample comprising a mixture of optical isomers into a mobile phase; and
passing the mobile phase having the sample injected thereinto through a column having an optical isomer separating agent capable of separating the optical isomers, wherein:
the mobile phase to be used is a mobile phase comprising a supercritical fluid; and
the optical isomer separating agent to be used is an optical isomer separating agent comprising 50 mass% or more of a polysaccharide derivative capable of separating the optical isomers with respect to a total amount of the optical isomer separating agent.

2. The method according to claim 1, wherein the optical isomer separating agent comprises 60 mass% or more of the polysaccharide derivative with respect to the total amount of the optical isomer separating agent.

3. The method according to claim 1, wherein the optical isomer separating agent comprises 80 mass% or more of the polysaccharide derivative with respect to the total amount of the optical isomer separating agent.

4. The method according to claim 1, wherein the polysaccharide derivative is one selected from cellulose trisbenzoate, cellulose tris(phenylcarbamate), and cellulose tris(3,5-dimethylphenylcarbamate).

5. The method according to claim 1, wherein the polysaccharide derivative is a polysaccharide derivative having amylose as a skeleton.
